# EUROPÄISCHE PATENTSCHRIFT

(11) **EP 1 076 887 B1**
(45) Veröffentlichungstag und Bekanntmachung des Hinweises auf die Patenterteilung: **13.07.2005**
(21) Anmeldenummer: 99920800.2
(22) Anmeldetag: 27.04.1999
(51) Int. Cl.: G07F 7/10

(54) **VERFAHREN ZUR AUTHENTISIERUNG EINER CHIPKARTE INNERHALB EINES NACHRICHTENÜBERTRAGUNGS-NETZWERKS**
METHOD FOR AUTHENTICATING A CHIP CARD IN A MESSAGE TRANSMISSION NETWORK
PROCEDE POUR AUTHENTIFIER UNE CARTE A PUCE DANS UN RESEAU DE TRANSMISSION DE DONNEES

(30) Priorität: 07.05.1998 DE 19820422
(43) Veröffentlichungstag der Anmeldung: 21.02.2001
(73) Patentinhaber: Giesecke & Devrient GmbH, 81677 München (DE)
(72) Erfinder: VEDDER, Klaus, D-80801 München (DE)
(74) Vertreter: Klunker . Schmitt-Nilson . Hirsch
(86) Internationale Anmeldenummer: PCT/EP1999/002848
(87) Internationale Veröffentlichungsnummer: WO 1999/057689

(56) Entgegenhaltungen:
- EP-A- 0 098 437
- EP-A- 0 502 446
- EP-A- 0 840 480
- DE-A- 3 426 006

## Beschreibung

Die Erfindung betrifft ein Verfahren zur Authentisierung einer Chipkarte in einem Netzwerk zur Nachrichtenübertragung, vorzugsweise in einem GSM-Netzwerk, nach dem Oberbegriff des Anspruchs 1.

Bei GSM-Systemen ist es bekannt, daß sich zum Gebrauch der Chipkarte (Subscriber Identity Module, SIM) zunächst der Benutzer üblicherweise mittels einer persönlichen Identifikationsnummer (PIN) als zur Benutzung berechtigt ausweisen muß. Um an dieser Stelle Mißbrauch zu vermeiden, ist es für die PIN-Eingabe bekannt, einen Fehlerzähler vorzusehen, der nach Überschreiten einer zulässigen Anzahl von Fehlversuchen den weiteren Gebrauch der Karte unterbindet.

Eine weitere systemrelevante Sicherheitsmaßnahme besteht in der Authentisierung der Karte gegenüber dem Mobilfunknetz. Dazu sind in der Karte ein von außen nicht zugänglicher geheimer Schlüssel sowie ein ebenfalls von außen nicht zugänglicher Algorithmus abgelegt. Für eine Authentisierung wird vom Netzwerk bzw. einer Netzwerkkomponente eine Zufallszahl erzeugt und der Karte mitgeteilt. Aus der Zufallszahl und dem geheimen Schlüssel berechnet sodann die Karte mittels des in der Karte vorhandenen Algorithmus eine Antwort, welche sie dem Netzwerk mitteilt. Diese Antwort wird im Netzwerk analysiert und es wird, bei positivem Ergebnis, Zugang zu den Netzwerkfunktionen erlaubt. Die entsprechende Vorgehensweise ist in den einschlägigen GSM-Spezifikationen beschrieben.

Für ein wie vorstehend gesichertes Netz besteht die Gefahr, daß durch Angriffe auf den zur Authenhsierung verwendeten Algorithmus das Netzwerk beispielsweise in einem Computer simuliert werden kann, in dem z.B. ausgewählte "Zufallszahlen" nach dem standardisierten Protokoll an die SIM-Karte übermittelt werden und daraus, nach mehrfachen Authentisierungsversuchen, der Geheimschlüssel der Chipkarte ermittelt wird. Ist zusätzlich der Algorithmus der Karte bekannt, können nach Ermittlung des geheimen Schlüssels wesentliche Funktionselemente der Karte simuliert bzw. dupliziert werden.

Aus der EP 0 840 480 A2 ist ein Authentisierungssystem bekannt, bei dem eine Zufallszahl erzeugt wird, die in zwei Teile aufgeteilt wird, wobei der erste Teil der Zufallszahl konvertiert wird, wozu der zweite Teil der Zufallszahl als Schlüssel verwendet wird. In den gängigen Nachrichtensystemen, insbesondere in GSM ist dieses System nicht anwendbar, da dort die Zufallszahlen als Ganzes übertragen werden und die Schlüssel selbst unabhängig von diesen Zufallszahlen sind.

Es ist deshalb Aufgabe der Erfindung, ein sicheres Verfahren zur Authentisierung einer Chipkarte in einem Nachrichtensystem anzugeben, bei dem, wie beispielsweise im GSM-Netz üblich, eine Rückmeldung über das Authentisierungsergebnis an die teilnehmende Chipkarte nicht erfolgt.

Diese Aufgabe wird gemäß der Erfindung ausgehend von den Merkmalen des Oberbegriffs des Anspruchs 1 durch die kennzeichnenden Merkmale des Anspruchs 1 gelöst.

Vorteilhafte Ausgestaltungen der Erfindung sind in den abhängigen Ansprüchen angegeben.

Die Erfindung sieht vor, zur Bildung der Authentisierungsnachricht sowohl aus dem geheimen Schlüssel als auch aus der vom Netzwerk übertragenen Zufallszahl innerhalb der Chipkarte jeweils wenigstens zwei Teile zu bilden, wobei genau einer der Teile der übertragenen Zufallszahl und einer oder mehrere Teile des geheimen Schlüssels mittels eines ein- oder mehrstufigen, vorzugsweise symmetrischen Berechnungsalgorithmus verschlüsselt werden. Zur Ausgabe einer Authentisierungsnachricht wird ein auswählbarer Teil des nach dem Authentisierungsalgorithmus berechneten Ergebnisses an das Netzwerk übertragen.

In der gleichen Art und Weise wird auch der Kanalkodierungsschlüssel erzeugt, d.h. auch dort ist, beispielsweise bei einer Zweiteilung des Schlüssels und der Zufallszahl vorgesehen, daß entweder der erste oder der zweite Teil der übertragenen Zufallszahl mit dem ersten und/oder zweiten Teil des geheimen Schlüssels mit einem ein- oder mehrstufigen Algorithmus verknüpft wird um einen Kanalkodierungsschlüssel zu erhalten. Für die Bildung der Authentisierungsnachricht und des Kanalkodierungsschlüssels werden jeweils verschiedene Teile der vom Netzwerk erhaltenen Zufallszahl verwendet.

Eine weitere vorteilhafte Ausgestaltung der Erfindung sieht vor, daß der in der Karte abgelegte geheime Schlüssel sowie die Zufallszahl, welche vom Netzwerk an die Karte gesendet wird, in gleich lange Teile aufgeteilt werden. Damit kann in beiden Fällen der gleiche Berechnungsalgorithmus verwendet werden. Die Aufteilung der Zufallszahl bzw. des geheimen Schlüssels kann in der Weise erfolgen, daß eine einfache Teilung "in der Mitte" erfolgt oder sich überlappende Teilbereiche entstehen. Ebenso ist eine Teilung denkbar, in der die Summe der einzelnen Teile kleiner ist als die Bit-Länge der Zufallszahl bzw. des geheimen Schlüssels. Gemäß einer weiteren Variante können nach einem vorbestimmten Muster oder pseudozufällig jeweils eine vorgegebene Anzahl von Bits der Zufallszahl bzw. des geheimen Schlüssels zu jeweils einem Schlüssel- bzw. Zufallszahlenteil zusammengefaßt werden.

Als weitere vorteilhafte Ausgestaltung der Erfindung können als Berechnungsalgorithmen zur Authentisierung sowie zur Kanalkodierung DES-Algorithmen verwendet werden.

Eine andere vorteilhafte Variante der Erfindung sieht vor, daß zur Berechnung der Authentifizierungsparameter und der Kanalkodierungsschlüssel der vorzugsweise einstufige IDEA-Algorithmus verwendet wird.

Alternativ können zur Berechnung der Authentifizierungsparameter und der Kanalkodierungsschlussel Komprimierungsalgorithmen, vorzugsweise kryptografische Komprimierungsalgorithmen verwendet werden, deren Ausgabewerte eme geringere Lange als die Eingabeparameter aufweisen.

Zur Erhöhung der Sicherheit ist es vorteilhaft, einen mindestens zweistufigen Berechnungsalgorithmus zu verwenden, wobei sich ein Triple-DES-Algorithmus als besonders sicher erweist. Bei diesem Algorithmus wird zunächst mit einem ersten Teil des Schlüssels und einem Teil der Zufallszahl verschlüsselt, anschließend wird eine Entschlüsselung des Ergebrusses mit dem zweiten Teil des Schlüssels vorgenommen, um schließlich wieder mit dem ersten Teil des Schlüssels eine weitere Berechnung auszufuhren. Bei der letzten Verschlüsselung mit dem ersten Teil des Schlüssels kann in vorteilhafter Weise, insbesondere bei einer Schlüsselaufteilung in drei Schlüsselteile, ein neuer, dritter Schlüssel verwendet werden.

Eine weitere vorteilhafte Ausgestaltung der Erfindung ergibt sich, wenn die Auswahl des ersten oder zweiten Teils der Zufallszahl für die Authentisierung bzw. die Berechnung der Kanalkodierung im Wechsel erfolgt, wobei dieser Wechsel zufällig bzw. pseudozufällig ausgeführt wird und die Auswahl in der Karte und im Netzwerk auf die gleiche Weise erfolgt.

Im folgenden wird die Erfindung an Hand der Figuren 1 bis 3 näher beschrieben.
- Fig. 1: zeigt den Ablauf der kryptographischen Funktionen des SIM im GSM-Netz.
- Fig. 2: zeigt ein Blockschaltbild der Triple DES-Verschlüsselung.
- Fig. 3: zeigt Beispiele für die Aufteilung des geheimen Schlüssels bzw. der Zufallszahl

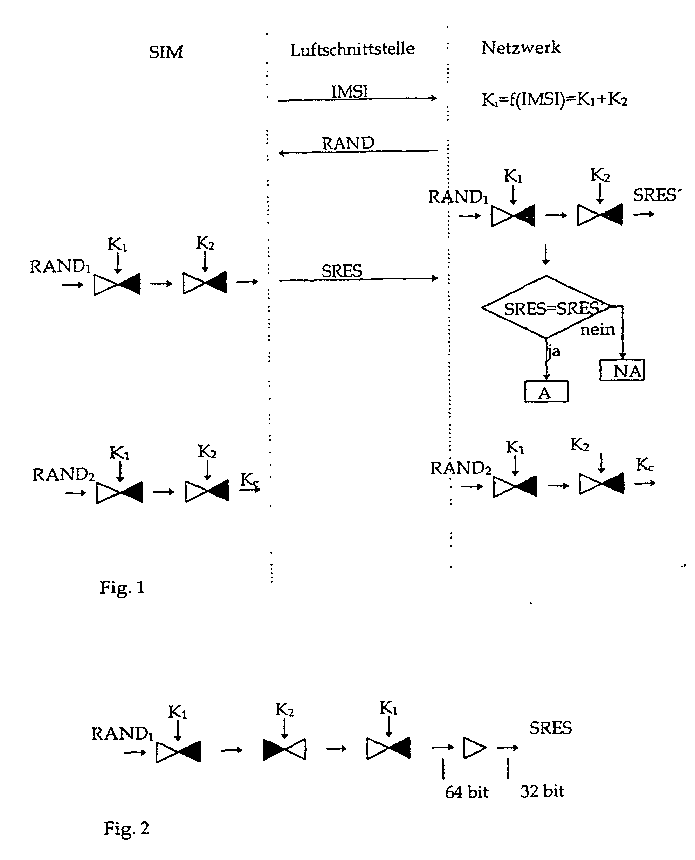

Bei dem in Fig. 1 dargestellten Ablauf wird vorausgesetzt, daß der übliche, vorhergehende Vorgang der PIN-Verifizierung abgeschlossen ist. Im Anschluß daran wird von der mobilen Einheit, in der sich die Karte SIM befindet, eine Nachricht an das Netzwerk gesendet, welche eine IMSI-(international mobile subscriber identity) Information bzw. eine TMSI-(temporary mobile subscriber identity) Information enthält. Aus der IMSI bzw. TMSI wird im Netzwerk nach einer vorgegebenen Funktion oder mittels einer Tabelle ein geheimer Schlüssel Kᵢ bestimmt. Derselbe Schlüssel ist auch in der Chipkarte SIM in einem nicht zugänglichen Speicherbereich abgelegt. Der geheime Schlüssel wird für die spätere Verifizierung des Authentisierungsvorganges benötigt.

Das Netzwerk initiiert sodann den Authentisierungsvorgang, indem es eine Zufallszahl RAND berechnet und diese über die Luftschnittstelle an die Chipkarte SIM überträgt.

In der Chipkarte wird daraufhin mittels eines Authentisierungsalgorithmus aus dem geheimen Schlüssel Kᵢ und der Zufallszahl RAND ein Authentisierungsparameter SRES gebildet, der über die Luftschnittstelle wiederum an das Netzwerk übertragen wird. Erfindungsgemäß werden hierbei aus der Zufallszahl RAND mindestens zwei Zufallszahlen RAND₁ und RAND₂ abgeleitet. Die Zufallszahlen RAND₁ und RAND₂ können durch Teilung oder eine Auswahl aus der Zufallszahl RAND bzw. durch einen Berechnungsalgorithmus gewonnen werden.

Die Authentisierung erfolgt im Ausführungsbeispiel nach Fig.1 mit einem zweistufigen Algorithmus. Dabei wird, wie in Fig. 1 angedeutet, zunächst der erste Teil der Zufallszahl RAND₁ mit einem ersten Teil K₁ des ebenfalls in zwei Teile aufgeteilten Schlüssels Kᵢ verschlüsselt. Das Ergebnis dieser ersten Stufe wird anschließend in einer zweiten Stufe mit dem zweiten Teil des Schlüssels K₂ verschlüsselt. Selbstverständlich kann zur Berechnung mit dem Authentisierungsalgorithmus zunächst auch der zweite Teil der Zufallszahl RAND₂ verwendet und die Reihenfolge der Verwendung der ersten und zweiten Schlüsselteile K₁ und K₂ verändert werden.

Im Netzwerk wird währenddessen auf dieselbe Weise wie in der Karte mittels des Authentisierungsalgorithmus und der Zufallszahl RAND (RAND₁, RAND₂) sowie des geheimen Schlüssels Kᵢ (K₁, K₂) ebenfalls ein Authentisierungsparameter SRES' gebildet. Der Parameter SRES' wird im Netzwerk sodann mit dem von der Karte erhaltenen Authentisierungsparameter SRES verglichen. Stimmen beide Authentisierungsparameter SRES' und SRES überein, wird der Authentisierungsvorgang erfolgreich abgeschlossen. Stimmen die Authentisierungsparameter nicht überein, gilt die Karte des Teilnehmers als nicht authentisiert. Es sei an dieser Stelle angemerkt, daß zur Bildung von SRES bzw. SRES' auch nur Teile aus dem durch die Verschlüsselung erhaltenen Ergebnisses verwendet werden können.

In der gleichen Weise wie die Erzeugung der Authentisierungsparameter erfolgt in der Karte und im Netzwerk die Generierung eines Schlüssels K_{c} für Kanalkodierung für die Daten- und Sprachübertragung. Dabei wird als Eingangsparameter der bei der Authentisierung nicht verwendete Teil der Zufallszahl RAND verwendet.

Figur 2 zeigt ein vorteilhaftes Ausführungsbeispiel, demgemäß die Berechnung mit dem Authentisierungsalgorithmus und/ oder die Kanalcodierung durch einen Triple-DES-Algorithmus ausgeführt wird. Nach diesem Algorithmus wird zunächst ein Teil RAND₁ oder RAND₂ der Zufallszahl mit einem ersten Schlüsselteil K₁ verschlüsselt. Im nächsten Schritt erfolgt eine Entschlüsselung mit K₂. Das Ergebnis wird danach wieder mit K₁ oder bei einer Aufteilung in mehrere Zufallszahlen-/Schlüsselteile mit einem dritten Teil des Schlüssels verschlüsselt. Die Bildung der Kanalcodierung erfolgt auf die gleiche Weise. Im Netzwerk werden jeweils die entsprechenden Algorithmen verwendet.

Ohne Beschränkung der Allgemeinheit wurde bei der Beschreibung der Ausführungsbeispiele gemäß den Fig. 1 und 2 von einem zwei- bzw. dreistufigen, symmetrischen Verschlüsselungsalgorithmus ausgegangen. Selbstverständlich kann der Erfindungsgedanke, welcher in der Aufteilung der Zufallszahl sowie des geheimen Schlüssels besteht, auch mit anderen, gängigen Verschlüsselungs- bzw. Berechnungsalgorithmen durchgefuhrt werden. Beispielhaft sei hier neben den DES-Algorithmen (A3; A8) IDEA genannt. Die genannten Algorithmen können auch einstufig ausgeführt sein, wobei vorzugsweise unterschiedliche Teile des Schlüssels und/ oder der Zufallszahl für die Authentisierung und die Erzeugung des Kanalkodierungsschlüssels K_{c} erzeugt werden.

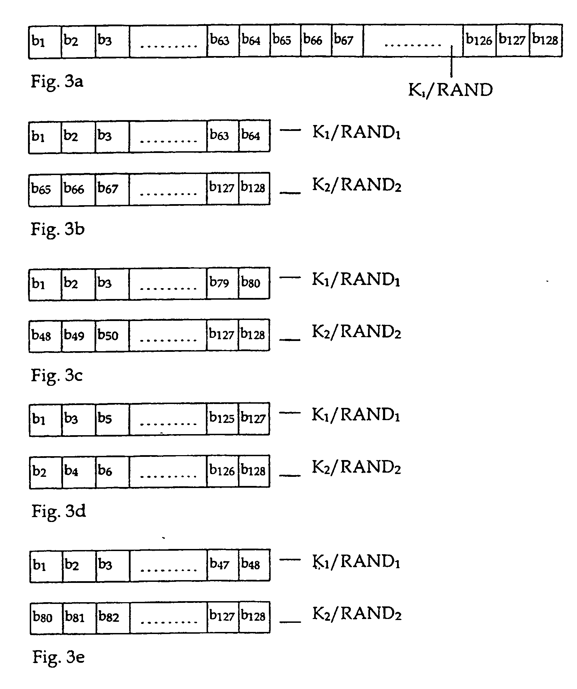

In den Figuren 3a - e sind Beispiele für mögliche Aufteilungen des geheimen Schlüssels Kᵢ bzw. der Zufallszahl RAND angegeben.

Die Figur 3a zeigt einen Schlüssel Kᵢ bzw. eine Zufallszahl RAND mit einer Länge von 128 bit.

In der Figur 3b ist eine Aufteilung in zwei gleiche Teile K₁ und K₂ (RAND₁, RAND₂) dargestellt, wobei die Aufteilung mittig erfolgt. Teil 1 enthält bit 1 bis bit 64, Teil 2 enthält bit 65 bis bit 128. In Figur 3c ist eine überlappende Aufteilung angegeben und in der Figur 3d ist eine Aufteilung dargestellt, bei der jeweils die ungeradzahligen bits dem Teil 1 und die geradzahligen bits dem Teil 2 zugeordnet sind Figur 3e zeigt schließlich eine Aufteilung, bei der die Summe der Binärstellen der Teile 1 und 2 kleiner ist als die Binärstellen des Ausgangsschlüssels bzw. der Ausgangszufallszahl.

## Patentansprüche

1. Verfahren zur Authentisierung einer Chipkarte (SIM) in einem Netzwerk zur Nachrichtenübertragung, vorzugsweise in einem GSM-Netzwerk, bei dem in einer Chipkarte (SIM) ein Algorithmus sowie ein geheimer Schlüssel gespeichert sind, wobei zur Authentisierung
- zunächst vom Netzwerk oder einer Netzwerkkomponente eine Zufallszahl (RAND) an die Chipkarte übertragen wird,
- in der Chipkarte daraus mittels des Algorithmus und des geheimen Schlüssels (Kᵢ) ein Antwortsignal (SRES) erzeugt und an das Netzwerk bzw. die Netzwerkkomponente übermittelt wird,
**dadurch gekennzeichnet, daß**
- zur Bildung eines Authentisierungsparameters der geheime Schlüssel (Kᵢ) sowie die Zufallszahl (RAND) innerhalb der Chipkarte in jeweils wenigstens zwei Teile (K₁, K_{2;} RAND₁, RAND₂) aufgeteilt werden,
- genau einer der Teile (RAND₁, RAND₂) der übertragenen Zufallszahl (RAND) mit Hilfe eines oder mehrerer Teile (K₁, K₂) des geheimen Schlüssels (Kᵢ) mittels eines ein- oder mehrstufigen, vorzugsweise symmetrischen Algorithmus verschlüsselt werden, und
- einer der übrigen Teile der übertragenen Zufallszahl (RAND) sowie ein und/oder weitere Teile des geheimen Schlüssels (Kᵢ) zur Berechnung eine Kanalkodierungsschlüssels (K_{c}) mittels eines ein- oder mehrstufigen Algorithmus verwendet werden, wobei zumindest ein Teil des Berechnungsergebnisses als Kanalkodierungsschlüssel (Kc) verwendet wird.

2. Verfahren nach Anspruch 1, **dadurch gekennzeichnet, daß** der geheime Schlüssel (Ki) und/oder die Zufallszahl (RAND) in zwei Teile aufgeteilt werden.

3. Verfahren nach einem der Ansprüche 1 oder 2, **dadurch gekennzeichnet, daß** der Schlüssel (Kᵢ) sowie die Zufallszahl (RAND) in zwei gleich lange Teile (K₁, K₂/RAND₁, RAND₂) aufgeteilt werden.

4. Verfahren nach einem der Ansprüche 1 bis 3, **dadurch gekennzeichnet, daß** zur Berechnung der Authentifizierungsparameter (SRES, SRES') und/oder des Kanalkodierungsschlüssels (K_{c}) DES-Algorithmen verwendet werden.

5. Verfahren nach einem der Ansprüche 1 bis 3, **dadurch gekennzeichnet, daß** zur Berechnung der Authentisierungsparameter (SRES, SRES') und/oder des Kanalkodierungsschlüssels (K_{c}) der, vorzugsweise einstufige, IDEA-Algorithmus verwendet wird.

6. Verfahren nach einem der Ansprüche 1 bis 3, **dadurch gekennzeichnet, daß** zur Berechnung der Authentisierungsparameter (SRES, SRES') und/ oder des Kanalkodierungsschlüssels (K_{c}) ein Komprimierungsalgorithmus verwendet wird, dessen Ausgabewert eine geringere Länge als der Eingabeparameter aufweist.

7. Verfahren nach einem der Ansprüche 1 bis 6, **dadurch gekennzeichnet, daß** die Berechnung in einem mindestens zweistufigen Algorithmus erfolgt.

8. Verfahren nach einem der Ansprüche 1 bis 7, **dadurch gekennzeichnet, daß** als Verschlüsselungsalgorithmus ein Triple-DES-Algorithmus verwendet wird, bei dem zunächst mit dem ersten Teil (K₁) des Schlüssels (K₁) verschlüsselt, anschließend mit dem zweiten Teil (K₂) des Schlüssels (K₁) entschlüsselt und darauf wieder mit dem ersten Teil (K₁) oder einem dritten Teil des Schlüssels (Kᵢ) verschlüsselt wird.

9. Verfahren nach einem der Ansprüche 1 bis 8, **dadurch gekennzeichnet, daß** eine Auswahl des ersten oder zweiten Teils der Zufallszahl (RAND) im zufälligen oder pseudozufälligen Wechsel in der Karte und im Netzwerk in gleicher Weise erfolgt.

## Claims

1. A method for authenticating a chip card (*SIM*) in a messaging network, preferably a GSM network, wherein an algorithm and a secret key are stored in a chip card (*SIM*), whereby for authentication
- the network or a network component first transfers a random number (*RAND*) to the chip card,
- a response signal (*SRES*) is generated therefrom in the chip card by means of the algorithm and the secret key (*K*_{*i*}) and transmitted to the network or network component,
**characterized in that**
- to form an authentication parameter the secret key (*K*_{*i*}) and the random number (*RAND*) are each split into at least two parts (*K*₁, *K*₂; *RAND*₁, *RAND*₂) within the chip card,
- exactly one of the parts (*RAND*₁, *RAND*₂) of the transferred random number (*RAND*) is encrypted with the aid of one or more parts (*K*₁, *K*₂) of the secret key (*K*_{*i*}) by means of a one- or multistep, preferably symmetrical algorithm, and
- one of the other parts of the transferred random number (*RAND*) and one and/or more parts of the secret key (*K*_{*i*}) are used to calculate a channel coding key (*K*_{*c*}) by means of a one- or multistep algorithm, at least one part of the calculation result being used as the channel coding key (*K*_{*c*}).

2. A method according to claim 1, **characterized in that** the secret key (*K*_{*i*}) and/or the random number (*RAND*) are split into two parts.

3. A method according to either of claims 1 and 2, **characterized in that** the key (*K*_{*i*}) and the random number (*RAND*) are split into two equally long parts (*K*₁, *K*₂/*RAND*₁, *RAND*₂).

4. A method according to any of claims 1 to 3, **characterized in that** DES algorithms are used to calculate the authentication parameters (*SRES, SRES*) and/or the channel coding key (*K*_{*c*}).

5. A method according to any of claims 1 to 3, **characterized in that** the, preferably one-step, IDEA algorithm is used to calculate the authentication parameters (*SRES, SRES*') and/or the channel coding key (*K*_{*c*}).

6. A method according to any of claims 1 to 3, **characterized in that** a compression algorithm whose output value has a smaller length than the input parameter is used to calculate the authentication parameters (*SRES, SRES*') and/or the channel coding key (*K*_{*c*}).

7. A method according to any of claims 1 to 6, **characterized in that** the calculation is effected in an at least two-step algorithm.

8. A method according to any of claims 1 to 7, **characterized in that** a triple DES algorithm is used as an encryption algorithm, whereby one first encrypts with the first part (*K*₁) of the key (*K*_{*i*}), then decrypts with the second part (*K*₂) of the key (*K*_{*i*}) and thereupon encrypts again with the first part (*K*₁) or a third part of the key (*K*_{*i*}).

9. A method according to any of claims 1 to 8, **characterized in that** a selection of the first or second part of the random number (*RAND*) is effected in the same way in the card and the network in random or pseudorandom alternation.

## Revendications

1. Procédé pour authentifier une carte à puce (SIM) dans un réseau de transmission de données, de préférence dans un réseau GSM, dans lequel un algorithme ainsi qu'une clé secrète sont mémorisés dans une carte à puce (SIM), dans lequel en vue de l'authentification :
- en premier lieu, un nombre aléatoire (RAND) est transmis depuis le réseau ou depuis un composant de réseau à la carte à puce,
- un signal de réponse (SRES) est généré à partir de cela dans la carte à puce au moyen de l'algorithme et de la clé secrète (Kᵢ) et est transmis au réseau ou au composant de réseau,
**caractérisé en ce que**
- la clé secrète (Kᵢ) ainsi que le nombre aléatoire (RAND) sont respectivement divisés en au moins deux parties (K₁, K₂ ; RAND₁, RAND₂) à l'intérieur de la carte à puce en vue de la formation d'un paramètre d'authentification,
- juste une des parties (RAND₁, RAND₂) du nombre aléatoire transmis (RAND) est chiffrée à l'aide d'une ou plusieurs parties (K₁, K₂) de la clé secrète (Kᵢ) au moyen d'un algorithme à un ou plusieurs niveaux, de préférence symétrique, et
- une des parties restantes du nombre aléatoire transmis (RAND) ainsi qu'une et/ou d'autres parties de la clé secrète (Kᵢ) sont utilisées en vue du calcul d'une clé de codage de canal (K_{c}) au moyen d'un algorithme à un ou plusieurs niveaux, au moins une partie du résultat du calcul étant utilisée en tant que clé de codage de canal (K_{c}).

2. Procédé selon la revendication 1, **caractérisé en ce que** la clé secrète (Kᵢ) et/ou le nombre aléatoire (RAND) sont divisés en deux parties.

3. Procédé selon l'une quelconque des revendications 1 ou 2, **caractérisé en ce que** la clé secrète (Kᵢ) ainsi que le nombre aléatoire (RAND) sont divisés en deux parties de même taille (K₁, K₂/RAND₁, RAND₂).

4. Procédé selon l'une quelconque des revendications 1 à 3, **caractérisé en ce que** des algorithmes DES sont utilisés en vue du calcul du paramètre d'authentification (SRES, SRES') et/ou de la clé de codage de canal (K_{c}).

5. Procédé selon l'une quelconque des revendications 1 à 3, **caractérisé en ce que** l'algorithme IDEA, de préférence à un niveau, est utilisé en vue du calcul du paramètre d'authentification (SRES, SRES') et/ou de la clé de codage de canal (K_{c}).

6. Procédé selon l'une quelconque des revendications 1 à 3, **caractérisé en ce qu'**un algorithme de compression, dont la valeur de sortie présente une taille inférieure à celle du paramètre d'entrée, est utilisé en vue du calcul du paramètre d'authentification (SRES, SRES') et/ou de la clé de codage de canal (K_{c}).

7. Procédé selon l'une quelconque des revendications 1 à 6, **caractérisé en ce que** le calcul s'effectue dans un algorithme à deux niveaux au moins.

8. Procédé selon l'une quelconque des revendications 1 à 7, **caractérisé en ce qu'**un algorithme Triple DES est utilisé en tant qu'algorithme de chiffrement, pour lequel il est procédé en premier lieu à un chiffrement avec la première partie (K₁) de la clé (Kᵢ), puis à un déchiffrement avec la deuxième partie (K₂) de la clé (Kᵢ) et ensuite à un nouveau chiffrement avec la première partie (K₁) ou avec une troisième partie de la clé (Kᵢ).

9. Procédé selon l'une quelconque des revendications 1 à 8, **caractérisé en ce qu'**une sélection de la première ou de la deuxième partie du nombre aléatoire (RAND) s'effectue de la même manière dans la carte et dans le réseau, en alternance aléatoire ou pseudo-aléatoire.
